# EUROPEAN PATENT SPECIFICATION

(11) **EP 0 700 787 B1**
(45) Date of publication and mention of the grant of the patent: **11.11.1998**
(21) Application number: 95114156.3
(22) Date of filing: 08.09.1995
(51) Int. Cl.: B41J 2/475

(54) **Recording device and recording method**
Verfahren und Vorrichtung zur Aufzeichnung
Méthode et dispositif d'enregistrement

(30) Priority: 09.09.1994 JP 242210/94
(43) Date of publication of application: 13.03.1996
(73) Proprietor: SONY CORPORATION, Tokyo (JP)
(72) Inventor: Shinozaki, Kenji, c/o Sony Corporation, Shinagawa-ku, Tokyo (JP); Hirano, Hideki, c/o Sony Corporation, Shinagawa-ku, Tokyo (JP)
(74) Representative: Müller, Frithjof E., Dipl.-Ing.

(56) References cited:
- EP-A- 0 243 117
- EP-A- 0 495 623
- EP-A- 0 608 881
- EP-A- 0 609 149
- US-A- 4 740 801
- PATENT ABSTRACTS OF JAPAN vol. 016 no. 557 (M-1340) ,27 November 1992 & JP-A-04 212863 (FUJITSU LTD) 4 August 1992,
- PATENT ABSTRACTS OF JAPAN vol. 016 no. 293 (M-1273) ,29 June 1992 & JP-A-04 080089 (NEC CORP) 13 March 1992,
- PATENT ABSTRACTS OF JAPAN vol. 012 no. 332 (M-738) ,8 September 1988 & JP-A-63 095951 (SUKEKAZU KAMANAKA) 26 April 1988,
- PATENT ABSTRACTS OF JAPAN vol. 012 no. 376 (M-750) ,7 October 1988 & JP-A-63 126758 (MATSUSHITA ELECTRIC IND CO LTD) 30 May 1988,
- PATENT ABSTRACTS OF JAPAN vol. 018 no. 317 (M-1622) ,16 June 1994 & JP-A-06 071874 (SONY CORP) 15 March 1994,

## Description

### BACKGROUND OF THE INVENTION

### Field of the Invention

The present invention relates to a recording device and a recording method using this recording device.

### Description of Related Art

With recent rapid progress in color video recording system such as video camera, television and computer graphics, etc., requirement for colored hard copy is quickly growing. Considering such background, many color printers of various systems have been developed and used in various fields.

Of these recording systems, there is provided a system that an ink sheet which is coated with an ink layer where high concentration transfer dye is dispersed into an adequate binder resin and a receiver material such as photographic paper which is coated with dye receiving resin as a reservoir for transferred dye are set in the close contactness with a constant pressure, heat is applied thereto depending on a video information from a thermosensitive recording head located on the ink sheet and the transfer dye is thermally transferred depending on the amount of heat applied to the image receiving layer from the ink sheet.

A so-called thermal transfer system, which is characterized in that a full-color image having continuous gradation can be obtained by repeating the operations explained above for the video signals decoded into three primary colors in subtractive mixture, that is, yellow, magenta and cyan, is attracting considerable attention as the excellent technique which can be put into practical use in small size ensuring easier maintenance work to obtain, on the realtime basis, a high quality image like a silver-salt color photographic image.

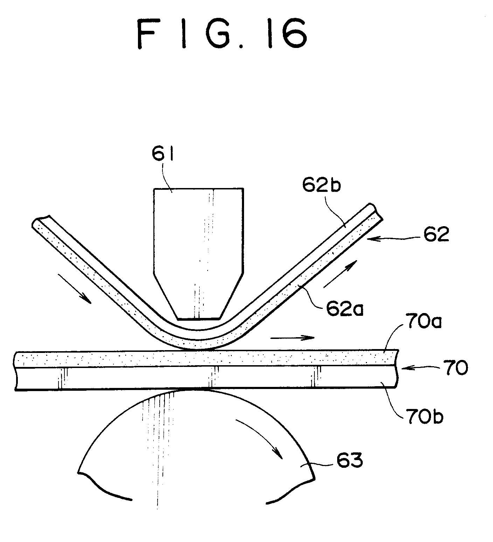

Fig. 16 is a schematic front elevation diagram of the essential portion of a thermal transfer system printer.

The thermosensitive recording head (hereinafter called a thermal head) 61 and a platen roller 63 are provided opposed with each other, an ink sheet 62 where an ink layer 62a is laid on a base film 62b and a recording sheet (receiver material) 70 where a dye receiving resin layer 70a is laid on a paper sheet 70b are provided therebetween, and these ink sheet 62 and recording sheet 70 are pressed toward the thermal head 61 by the platen roller 63.

The ink (transfer dye) in the ink layer 62a which is selectively heated by the thermal head 61 is transferred dot by dot to the dye receiving resin layer 70a of the receiver material 70 to perform the thermal transfer recording. Such thermal transfer recording generally employs a line system where a long-length thermal head is fixed for arrangement perpendicular to the running direction of the recording sheet.

However, this system has following disadvantages.
① Since an ink sheet as an ink supply material is manufactured to be used once for the printing and thereafter to be disposed, the ink sheets appear as a large amount of waste after the printing, resulting in a problem for energy saving and environmental protection. Moreover, the dye dispersed in the ink sheet is generally used for the actual printing in the rate of 10% or less and unused dye is wasted together with the ink sheet bringing about increase in the running cost of the printing.
② In view of reducing the amount of waste, a means for obtaining a full-color image through multiple use of ink sheet has been proposed. However, since the transfer dye layer and the receiver material are placed in the close contactness, when the transfer dye A is first transferred to the receiver material and the transfer dye B is then transferred thereto, the transfer dye A on the receiver material is reversely transferred to the layer of transfer dye B of the ink sheet, contaminating the transfer dye B. Therefore, the printing quality of the second and subsequent sheets may be deteriorated.
③ Since the ink sheet has a large volume, it gives limitation on realization of small size and light weight printer.
④ A so-called thermal transfer system is actually a transfer mechanism utilizing the thermal transfer phenomenon of dye. Therefore, an image receiving layer also has to be heated sufficiently for realizing dispersion of dye into the image receiving layer of the receiver material and thereby thermal efficiency becomes bad.
⑤ The ink sheet and receiver material must be pressed with a higher pressure for highly efficient transfer. Therefore, the printer is requested to have a rigid structure, giving restriction for realization of small size and light weight printer.
⑥ Transfer sensitivity may be improved by enhancing phase solubility between dye receiving layer of receiver material and transfer dye. However, the dye receiving resin having a higher compatibility with the transfer dye is generally inferior in stability for storing and particularly in optical stability.

As listed above, the so-called thermal transfer system has various disadvantages. Therefore, it has strongly been expected to develop the technique for manufacturing a small size and light weight printer by reducing an amount of waste and transfer energy while maintaining various merits explained above.

A recording device according to the preamble of claim 1 is known from EP 609149 A. A screen having a number of holes to be used in an electric field attraction recording device is known from JP 4212863 A, the inner walls of the holes are ink repellent.

### SUMMARY OF THE INVENTION

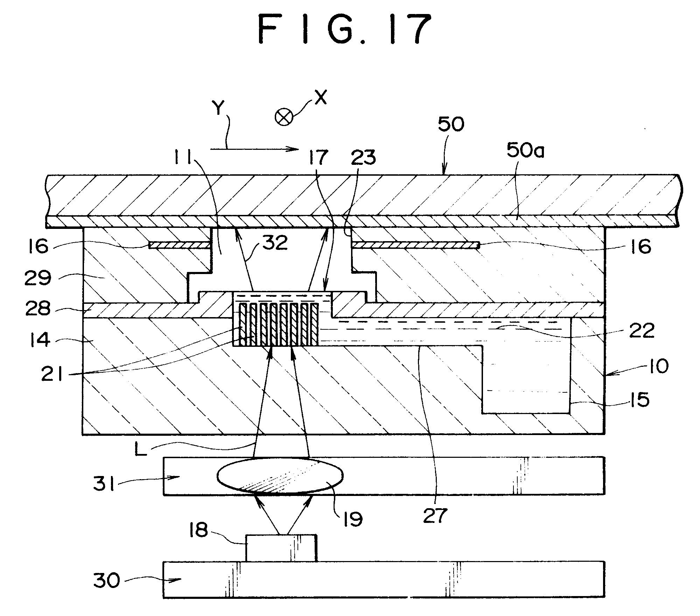

The inventors of the present invention have succeeded, after long-term researches and investigations, in development of a recording system as shown in Fig. 17 as a thermal recording system to meet the requirements explained above.

In this system, a fine gap is provided between a recording head unit comprising a dye layer having thermal solubility and a recording sheet 50 having a dye receiving layer to receive the dye provided opposed to the recording head. Thus, the liquefied dye 22 on the recording means is selectively vaporized by an adequate heating means such as a laser L, etc. and is then caused to transmit through the gap to form an image having the continuous gradation on the recording sheet 50. This operation is respectively repeated for the video signals decoded into the three primary colors in subtractive mixture, that is, yellow, magenta and cyan to obtain a full-color image on the recording sheet.

In this recording system, it is preferable that a photographic paper 50 is provided opposed to a recording head 10, for example, in the upper side thereof and the area near the surface of the vaporizing means 17 irradiated with the laser beam L which is emitted from a laser 18 and condensed by a lens 19, causing the vaporized dye 32 to fly over or transmit to the upper side. In this case, for successful transmission of the transfer dye through the gap 11 with the heating means, the phenomenon, which can often be seen when a high output laser is irradiated, that coupling of dye moleculars is effectively isolated and etching is performed at a very higher velocity using such decoupling energy and the phenomenon that etching is performed at a very higher velocity using an energy of gas generated by boiling or explosion can be utilized (the transfer mechanism other than such vaporization mechanism is called abrasion), as well as the vaporization phenomenon.

Moreover, a dye reservoir 15 is provided to a head base 14 having the laser beam transmitting property, a liquefied dye 22 is accommodated between such head base and a spacer 28 fixed thereon and the liquefied dye 22 is supplied to the vaporizing means 17 through a dye passage 27. In this case, for improvement of feeding efficiency of dye to the vaporizing means 17 and vaporization efficiency, fine unevenness formed of small columns 21 is provided at the vaporizing means 17 to supply and maintain the dye by making use of the capillarity.

In view of holding the above-mentioned gap 11 and guiding the photographic paper 50 moving in the direction X, a protection plate 29 is fixed on the spacer 28. A heater 16 is embedded in the protection plate 29 for maintaining the liquid condition of dye, but such heater may also be provided within the dye accommodating means (dye passage 27 and dye reservoir 15 explained above).

Considering a printer as a whole including this printer head, the dye reservoirs 15Y, 15M, 15C for yellow, magenta and cyan are respectively provided in the common base 14 for the full-color printing and each dye for each color is supplied therefrom to the vaporizing means 17Y, 17M, 17C arranged on a line forming as many as 12 to 24 dots.

Each vaporizing means is irradiated with each laser beam which is emitted from a multilaser array 30 composed of corresponding 12 to 24 lasers 18 (particularly, semiconductor laser chips) arranged in the shape of an array and is then condensed by a microlens array 31 formed of many condenser lenses 19.

In this system, since the dye used during the recording includes little binder resin, it can be supplied continuously to the recording head by making the dye in such amount as being lost flow into the transfer means under the fluid condition from the dye reservoir or by continuously coating an adequate base material with the dye of such amount and transmitting such base material to the recording means. Therefore, the recording head means can be used for several times in principle, thereby solving the problem ①.

Moreover, since the dye layer is isolated from the recording sheet, the problem ② that the recording dye which has been transferred to the recording sheet is reversely transferred to the different recording dye layer, deteriorating the image quality can also be solved and simultaneously a small size and light weight printer can be realized, solving the problem ③, because the dye reservoir of small volume can be used for supply of dye and the ink sheet is not used.

Furthermore, since this recording system employs a recording mechanism utilizing vaporization of dye and abrasion, it is no longer necessary to heat the image receiving layer of the recording sheet and the ink sheet and receiver material are not required to be pressed with a higher pressure. Therefore, the problems ④ and ⑤ can also be solved simultaneously. Since the recording head means is protected from direct contact with the recording sheet, not only the thermal fusing between the recording head means and the recording sheet is never generated in principle but also recording is possible even if the compatibility of both dye and image receiving layer resin is small. Therefore, range of design and selection of dye and image receiving layer resin can be widened remarkably, solving the problem ⑥.

As the dye just suitable for this system, any type of dye can be used, if it has adequate vaporization velocity or abrasion velocity, exists as a fluid at the temperature of 200°C or less under the independent or mixed condition and has the required and sufficient heatproof property. In practical, a dispersed dye, oil-soluble dye, basic dye or acidic dye may be listed.

Particularly, when the abrasion mechanism is superior to the vaporization mechanism, the recording is possible even by using a dye having a heavier molecular weight and low vaporization velocity just like a direct dye, carbon black or pigment. Even in the case that the dyes having a melting point higher than the room temperature are considered, these dyes form an eutectic mixture showing a lower melting point by mixing the dyes themselves or mixing a dye and a volatile substance having a light molecular weight. Moreover, provision of adequate temperature keeping device to the recording means allows use of the dye having the melting point higher than the room temperature or a mixture of dyes.

As the photographic paper just suitable for this system, any type of paper may be used, if it has adequate compatibility with dye and functions to easily receive the dye to accelerate natural color development thereof and fix the dye used. For instance, for the dispersed dye, the paper of which surface is coated with polyester resin, polychloride vinyl resin and acetate resin, etc. having good compatibility with the dispersed dye is preferable. The dye transferred to the photographic paper may also be fixed by a method that the recorded image is heated causing the dye at the surface to penetrate into the received image.

The heating means in this recording system may be roughly classified into a method using a thermal head and a method of combining a laser beam and a material (photo-thermal conversion material) which absorbs the laser beam including the wavelength region to convert an optical energy into a thermal energy. In the case of using a laser beam, resolution can be improved remarkably and the concentric heating may be realized by raising the laser beam density with an optical system. Thereby, arriving temperature rises, providing resultant improvement in the thermal efficiency.

Particularly, a time required for recording one frame of image can be drastically shortened by utilizing a multilaser. However, the photo-thermal conversion material has to sufficiently satisfy the heat-proof characteristic in order to continuously absorb the laser beam of optical energy. Therefore, as the photo-thermal conversion material used in this system, a thin film type light absorbing material, such as a metal thin film which absorbs the wavelength of laser generated and a double-layer film of a metal thin film and a ceramic thin film having a high dielectric coefficient, can be provided in direct to the vaporizing means and moreover a dye or pigment having excellent heat-proof characteristic, such as a fine-particle type light absorbing material like carbon black and metal fine particle, etc., or an organic pigment or organic metal type pigment, etc. like phthalocyanic pigment, naphthalocyanic pigment, cyanic pigment or anthraquinonic pigment, etc., may be dispersed uniformly into the transfer dye.

However, investigations have proved that the recording head illustrated in Fig. 17 still has the following problems to be solved.

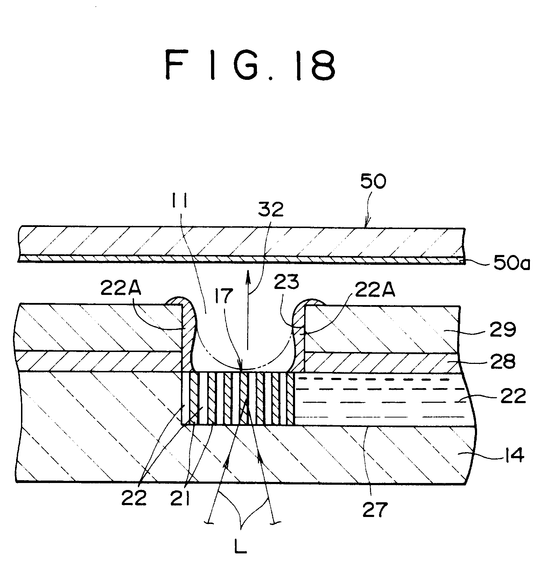

That is, in such a thermal recording system, the dye 22 liquefied by the heat treatment is supplied, through the capillarity, to the region near the small columns 21 provided at the vaporizing means 17. The liquefied dye 22, having arrived the surface of the vaporizing means 17 by means of the capillarity as illustrated in Fig. 18, is heated by the laser beam L in the vaporizing means 17 and partially overflows therefrom under the liquid condition. Here, a phenomenon is generated that the partially overflowing liquid dye 22A is deposited on the side wall surface and the area near the aperture of the vaporizing hole 23. As a result, the predetermined vaporizing hole 23 is reduced in size to impede the normal recording. Moreover, if such condition is left as it is, the overflowing dye 22A may further be deposited to such a degree as closing the vaporizing hole 23 as indicated by a virtual line in the same figure. If it comes true, the recording may be disabled.

The inventors of the present invention have reached the following conclusion after repeated investigations about generation of undesirable phenomenon explained above.

Generation of this phenomenon depends on relationship between a surface tension of the liquid dye 22 and a critical surface tension of the protection plate 29 forming the vaporizing hole 23. Namely, the phenomenon explained previously can be prevented by using a material, for the protection plate 29, having a critical surface tension γc which is smaller than γ when a surface tension of the liquid dye 22 is defined as γ. As explained above, the relationship γc < γ ensures that the liquid dye 22 is repelled by the protection plate 29, without wetting it. Therefore, it has also been found that the capillarity works to inversely return the dye 22 and accordingly if the liquid dye 22 overflows from the vaporizing means 17 as explained above, the dye 22 is no longer deposited on the wall surface of the vaporizing hole 23. The present invention has been proposed on the basis of such findings.

The present invention has been proposed considering the background explained previously and it is therefore an object of the present invention to provide a recording device and a recording method which always assures successful recording without allowing a recording material not used for the recording to be deposited on the aperture of the recording material accommodating area.

The present invention relates to a recording device according to claim 1.

In the present invention, a critical surface tension of at least the peripheral area of the aperture of the recording material accommodating means is preferably set smaller than a critical surface tension of a recording material reservoir forming the recording material accommodating means.

Moreover, in the present invention, a critical surface tension of at least the peripheral area of the aperture of the recording material accommodating means is preferably less than 20 dyn/cm.

Moreover, in the present invention, said peripheral part may comprise a peripheral member, having a critical surface tension which is smaller than a surface tension of a recording material, formed at the area near the aperture of the recording material accommodating means.

Moreover, in the present invention, the peripheral member may be removably attached to the aperture.

Moreover, in the present invention, the aperture preferably has a region of which the cross-sectional view becomes smaller toward the upper end thereof defined in the transferring direction of the recording material.

Moreover, in the present invention, a recording device with the features of claim 7 is preferred.

Moreover, in the present invention, a recording device with the features of claim 8 is preferred.

In the structure of the present invention, the heat source is preferably formed of a laser.

The present invention also relates to a recording method for realizing the recording by transferring a recording material to a recording sheet through an aperture, using the recording device explained above.

In the method of the present invention, a liquid recording material having a surface tension of 20 dyn/cm or higher is preferably used.

In the method of the present invention, at least any one of a kind of a liquid recording material used and a material of the peripheral member having a critical surface tension for the recording material which is smaller than a surface tension of the recording material can be selected.

### BRIEF DESCRIPTION OF THE DRAWINGS

Fig. 1 is a cross-sectional view (cross-sectional view corresponding to the line I-I in Fig. 2) of a recording head depending on a first embodiment (a serial type embodiment) of the present invention.

Fig. 2 is a plan view of a base of the same embodiment.

Fig. 3 is a disassembled perspective view of the recording head of the same embodiment.

Fig. 4 is a schematic rear view indicating a printer head of the same embodiment and a scanning condition thereof.

Fig. 5 is a schematic rear view indicating another printer head of the same embodiment and s scanning condition thereof.

Fig. 6 is a schematic perspective view observed from the lower side of the printer of the same embodiment.

Fig. 7 is an enlarged partial cross-sectional view indicating an example of a protection plate of the same embodiment.

Fig. 8 is a cross-sectional view of a recording head means depending on a second embodiment (a serial type embodiment) of the present invention.

Fig. 9 is a partial cross-sectional view of a recording head depending on a third embodiment (a serial type embodiment) of the present invention.

Fig. 10 is an enlarged partial cross-sectional view indicating another example of the protection plate in a serial type embodiment of the present invention.

Fig. 11 is an enlarged partial cross-sectional view indicating the other example of the protection plate in a serial type embodiment of the present invention.

Fig. 12 is an enlarged partial cross-sectional view indicating the other example of the protection plate in a serial type embodiment of the present invention.

Fig. 13 is an enlarged partial cross-sectional view indicating the other example of the protection plate in a serial type embodiment of the present invention.

Fig. 14 is an enlarged perspective view separatingly indicating the base of the same embodiment and the protection plate removably mounted to the base.

Fig. 15 is a disassembled perspective view of a printer depending on another embodiment (a line type embodiment) of the present invention.

Fig. 16 is a front elevation of the essential portion of the existing printer utilizing a thermosensitive recording head.

Fig. 17 is a schematic cross-sectional view of the recording head derived before accomplishment of the present invention.

Fig. 18 is a schematic partial cross-sectional view indicating application condition of the recording head shown in Fig. 17.

### DESCRIPTION OF THE PREFERRED EMBODIMENTS

The present invention will be explained in further detail depending on the preferred embodiments of the present invention, however the present invention is not naturally limited only to the preferred embodiments explained hereunder.

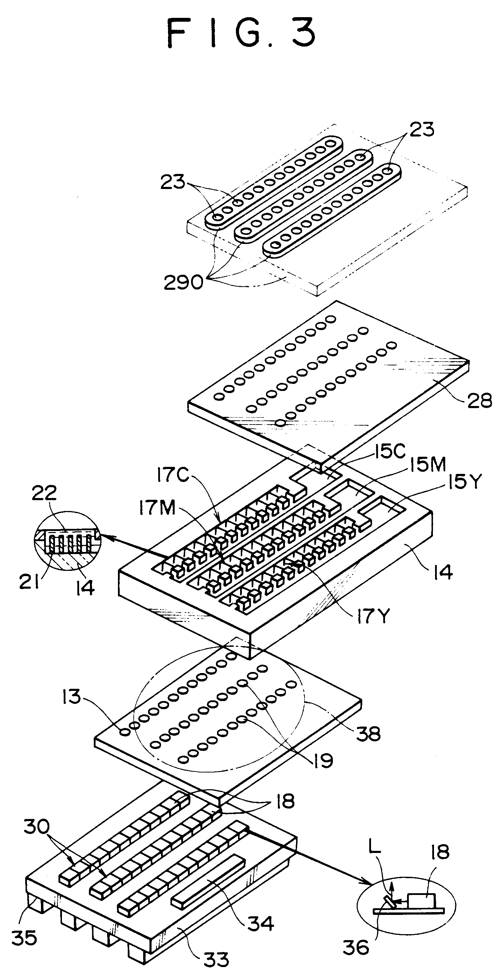

With reference to Fig. 3 to Fig. 6, a schematic structure of a non-contact dye vaporization type laser beam printer of a first embodiment (for example, a video printer comprising a serial type head) will be explained first.

In view of realizing multicolor printing in this dye vaporization type laser beam printer (also in the printer of the thermal recording system explained above), three pairs of printer heads (four pairs of heads in the case of additionally providing a head for black color) are prepared, for example, and these heads are provided closely for reduction in size to form a head unit for the multicolor printing.

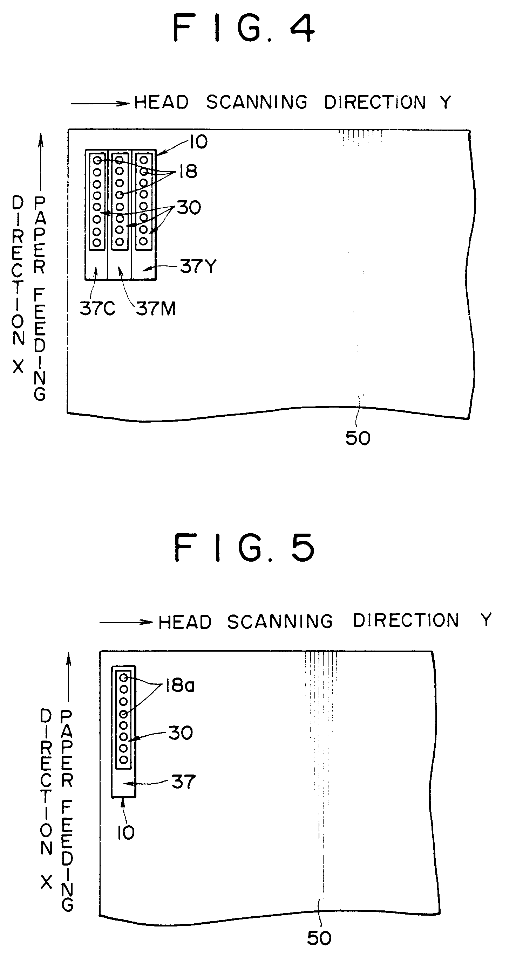

That is, as shown in Fig. 4, three primary laser arrays for each color are provided in parallel in the head scanning direction Y. In more practical, as shown in Fig. 3, the dye reservoirs 15C, 15M, 15Y of cyan, magenta and yellow are provided on the respective bases 14 for the purpose of full-color printing to form the dye accommodation means or dye feeding head means 38C, 37M, 37Y and the dyes of respective colors are fed to the vaporizing means 17C, 17M, 17Y arranged on a line forming as many as 12 to 24 dots.

For each vaporizing means, a laser beam emitted from a multilaser array 30 formed by providing 12 to 24 corresponding lasers (particularly, semiconductor laser chips) 18 in the form of an array is respectively condensed by a microlens array 31 formed by providing many condenser lenses 19 (the reference numeral 36 defines a mirror for guiding the laser beam L in the perpendicular direction).

As a condenser lens, a lens system indicated in the figure may naturally be used but a single large diameter condenser lens 38 indicated by a virtual line may also be used. The lens 38 is formed to change a refracting path so that the beam emitting position corresponds to the vaporizing means 17C, 17M, 17Y depending on the beam incident position. The multi-laser array 30 is controllably driven by a control IC 34 provided on a substrate 33 and efficiently radiates the heat through a heat sink 35.

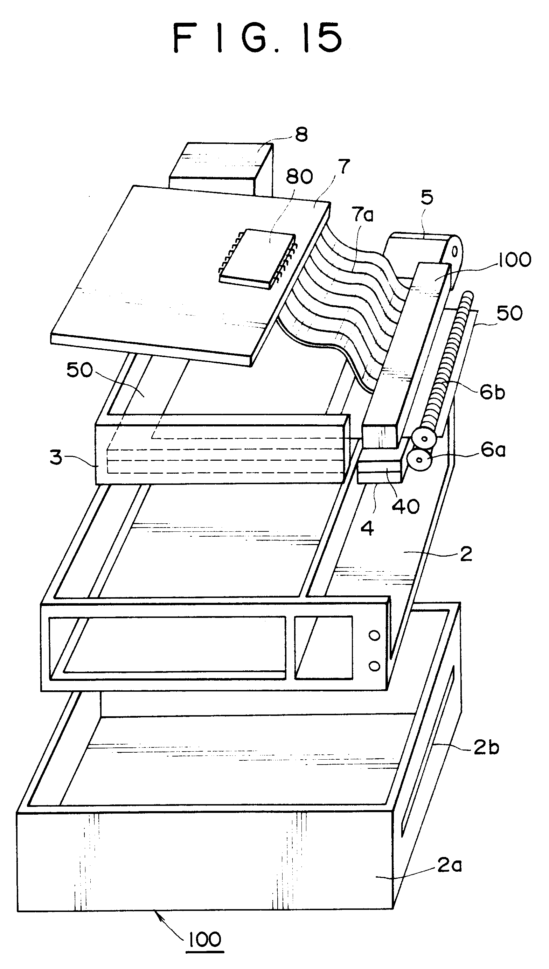

In the case of mono-color printing, as shown in Fig. 15, a primary laser array 30 is manufactured in the structure that the respective laser elements may be operated independently or in parallel. Thereby, the printing velocity equal to or higher than the single time of the number of beams (for example, the velocity of 24 times, when the laser array of 24 beams is used) can easily be obtained.

Each printer head 10 explained above accommodates, in the form of dots, the liquid dye 22 as many as the number of recording dots in the dye accommodating means 37 and also arranges the lasers 18 in the form of an array having light emitting points 18 as many as the recording dots. Even in the thermal transfer type printer not depending on the lasers 18, the heating means of the thermal head 1 are also arranged in the form of dots.

Each printer explained above realizes the printing with the paper feeding in the vertical direction (direction X) and the scanning in the lateral direction (direction Y) of the head perpendicular to the direction X. These vertical paper feeding and lateral head scanning are alternately carried out.

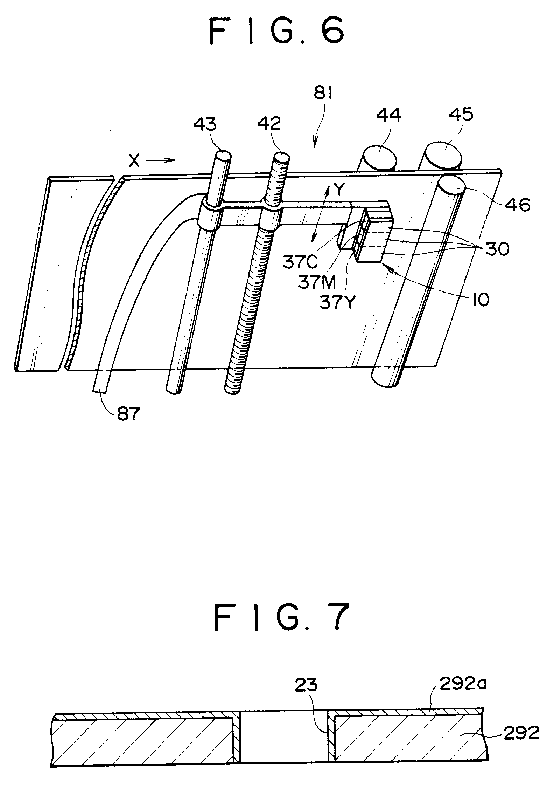

In the printer of this embodiment, the printer head 10 for multicolor printing can make the reciprocal movement in the head feeding direction Y perpendicular to the photographic paper feeding direction X by means of the head feeding shaft 42 consisting of a feed screw mechanism and the head supporting shaft 43 as shown in Fig. 6.

Moreover, at the upper side of the head 10, a head receiving roller 44 is rotatably provided to support the photographic paper 50 by holding it from both sides in combination with the head. The photographic paper 50 is held between the paper feed drive roller 45 and an inverted roller 46 to move in the paper feeding direction X.

The head 10 is respectively connected with a head drive circuit substrate (not illustrated) through a flexible harness 87. Moreover, the structure of the printer head 10 itself is basically same as that shown in Fig. 17.

Next, characteristics of the present embodiment will be explained hereunder.

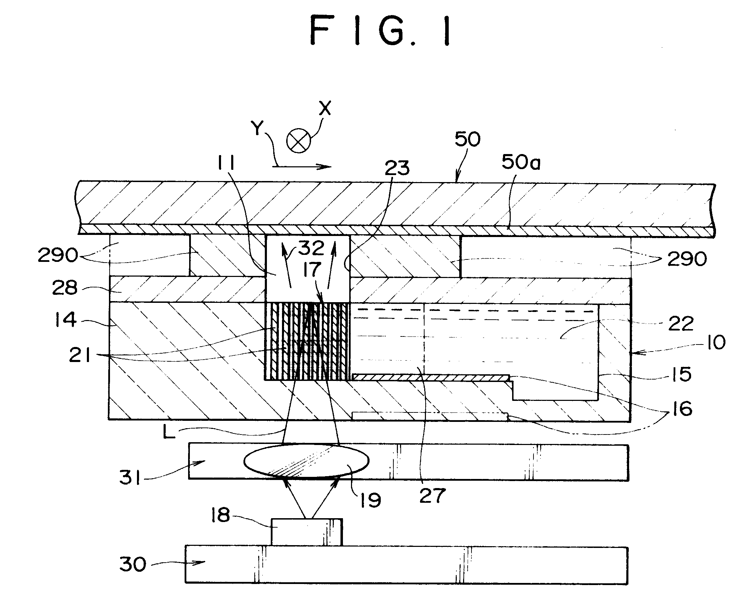

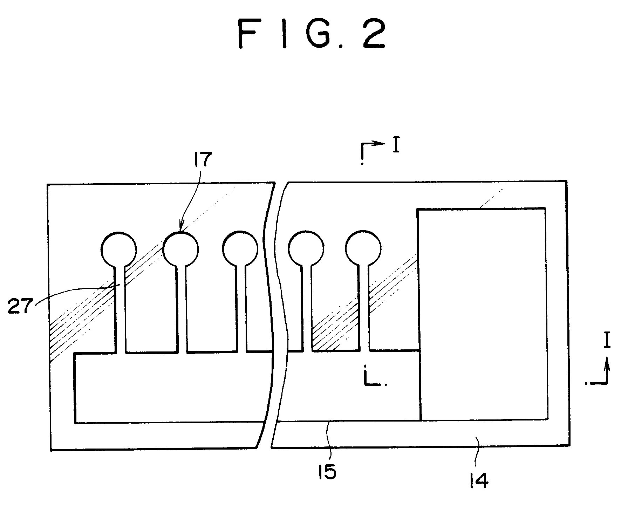

Fig. 1 illustrates a recording means of a recording unit depending on the first embodiment of the present invention which is a cross-sectional view along the line I-I of a plan view of the base 14 shown in Fig. 2. The structure itself of the printer head 10 of this embodiment is basically same as that already explained above with reference to Fig. 17. Therefore, explanation about the common part will be omitted and only the different characteristics of this embodiment will be explained below.

Here, it should be noted for the present embodiment that polytetrafluoroethylene (hereinafter referred to as Teflon) is used as a material of a protection plate 290. That is, use of the Teflon having a critical surface tension γc = 18 dyn/cm realizes the critical surface tension γc which is smaller than a surface tension γ (20 dyn/cm in this embodiment) of the liquid dye 22 at 250°C to prevent wetting of the protection plate 290 by the liquid dye 22. In Fig. 1, the reference numeral 28 defines a spacer and this space may also be made of the Teflon.

The dye 22 supplied from the dye reservoir 15 is heated by an ITO (Indium-Tin Oxide) heater 16 provided in the dye passage 27 and reaches the vaporizing means 17 by means of the capillarity through the dye passage 27 formed by the coverage of the protection plate 290 and small columns 21. When the liquid dye 22 is vaporized by irradiation of the laser beam L, the remaining dye not used for the recording is repelled by the protection plate 290 having a lower wettability (small critical surface tension γc ) and is never deposited on the wall surface of the vaporizing means. Thus, the recording with continuous gradation can be enabled. The heater 16 used in this embodiment may also be provided at the bottom surface of the base 14 as indicated by a virtual line. Moreover, also indicated by the virtual line, the protection plate 290 may also be provided at the entire surface of the spacer 28 and the recording dots may not be worn out by isolating the protection plate 290 and photographic paper 50 (it can also be applied to the other embodiments).

The other adequate materials may also be used, as well as Teflon, for the protection plate 290. Following materials can be listed, for example, as the material having a critical surface tension γc which is smaller than 20 (γc < 20).

| Name of Material | γc (dyn/cm) |
|---|---|
| Polypentadecafluoroactylacrylate | 10.4 |
| Polyperfluoro-t-buthylmethacrylate | 14.7 |
| Polyhepthafluorobuthylacrylate | 15.2 |
| Polyhexafluoropropylene | 16.2 to 17.1 |

Moreover, as shown in Fig. 7, the protection plate can also be formed by coating (292a) the glass material 292 with Teflon or the materials listed above (this process may also be applied to the spacer).

In the device shown in Fig. 1, the protection plate 290 is made of Teflon (γc = 18 dyn/cm) and the dye 22, which has been obtained by adding HM1225 (produced by Mitsui Toatsu Chemicals, Inc.) of 2 weight % as the laser absorbing agent to the Solvent Blue 35 having the physical material constants, γ = 20 dyn/cm at 250°C and p (density) = 1.0 g/cm³, has been used. The dye has been heated up to 160°C to be fused within the vessel and is then sent to the vaporizing means 17 through the dye passage 27. Thereby, the liquid dye did not overflow from the vaporizing means.

Moreover, when the vaporizing means 17 is irradiated with a semiconductor laser beam in the emission wavelength of 780 nm and output of 40 mW, the dye has been vaporized, realizing the recording on the photographic paper 50 located through the gap of 20 µm without generation of such a phenomenon that the liquid dye left unvaporized overflows from the vaporizing means. Thereby, the recording corresponding to optical concentration of 2.2 measured with a Macbeth densitometer (illuminometer) has been realized into an area of 80 µm × 80 µm of the photographic paper per 1 ms. In this case, diameter of the recording dots has been 40 µm.

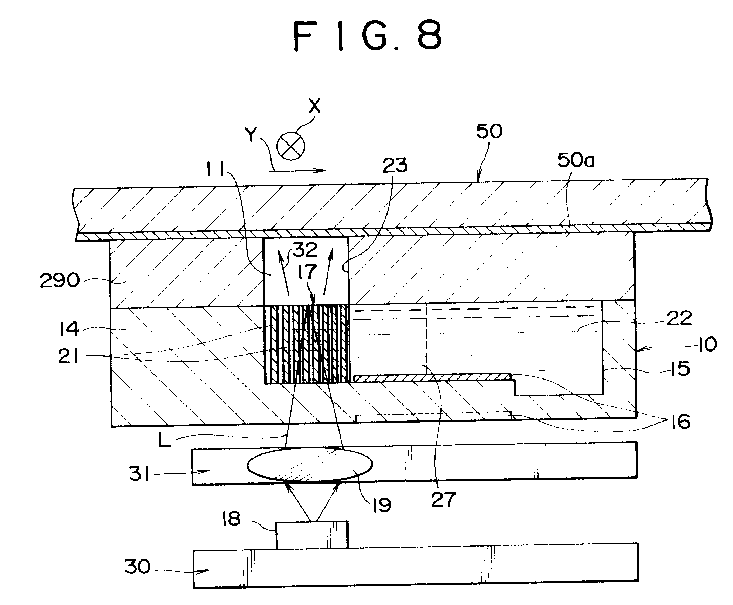

Fig. 8 is a cross-sectional view of similar to that of Fig. 1 of a recording means of the recording device depending on a second embodiment of the present invention. In this embodiment, a protection plate 290 made of Teflon is mounted in direct on the head base 14 without providing a spacer. However, in this embodiment, the protection plate 290 must be provided on the entire part of the base 14. The recording method and recording result are same as that in the first embodiment of the present invention explained previously.

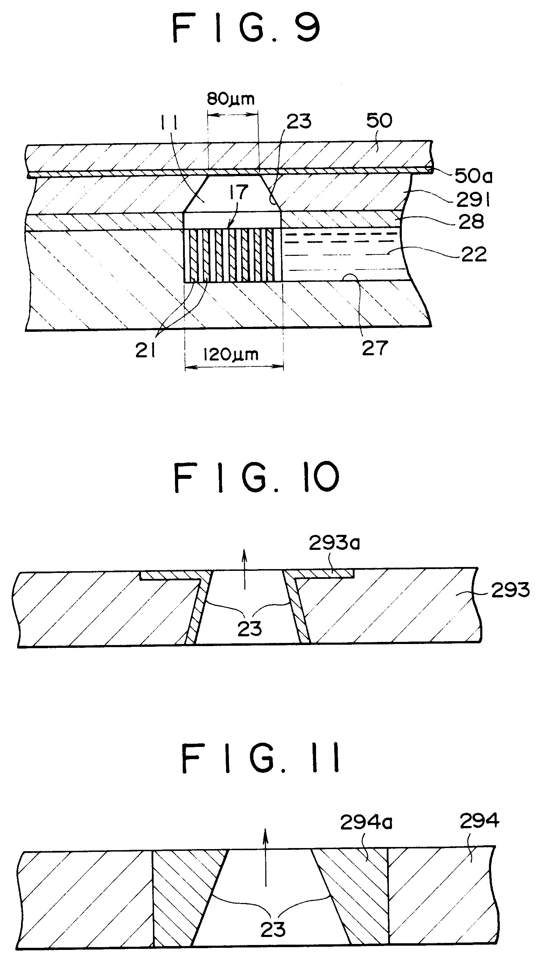

Fig. 9 is a cross-sectional view of the essential portion of the recording means of the recording device depending on a third embodiment of the present invention. As illustrated in the figure, the vaporization hole 23 of the protection plate 291 is formed in the truncated conic shape with the upper end of aperture given the reduced diameter, however, it is rather preferable. It is because the internal circumferential surface of the vaporizing hole works as if it were a lens, thereby the vaporized dye is plotted to a very narrow region on the photographic paper and, as a result, both recording concentration and resolution are enhanced. In addition, with an inclination of the internal circumferential surface of the vaporizing hole, the remaining liquid dye is effectively repelled. Moreover, such shape increases the pressure of the liquefied dye generated by heating and thereby injection velocity of the liquid dye is increased, ensuring effective transmission of dye toward the recording sheet.

In the recording using the device illustrated in Fig. 9 in the same manner as explained above, the recording explained regarding above embodiments have been carried out within 0.5 ms without any overflow of liquid dye from the vaporizing means 17 and the recording dots in diameter of 20 µm have been formed on the photographic paper placed opposed to the head through the gap of 20 µm.

For the purpose of comparison in above respective embodiments, the recording, which has been performed under the same condition as the first embodiment (example of Fig. 1) except for only use of a glass similar to the base 14 as the material of protection plate, has proved that the liquid dye has reached the vaporizing means 17 as explained above but the liquid dye has overflown to the vaporizing means 17 together with vaporized dye due to the irradiation of the laser beam. In above recording operation, a critical surface tension γc of glass is remarkably higher than 20 dyn/cm and is also 40 dyn/cm or higher.

From above recording result, it is apparently important that the surface tension of liquid dye γ and a critical surface tension γc at the vaporizing hole of the protection plate are in the relationship that γc is smaller than γ (γc < γ).

As the structure of the part near the vaporizing hole of the protection plate, various structures may be applied, as well as that indicated in various embodiments explained above. Several examples may be listed hereunder.

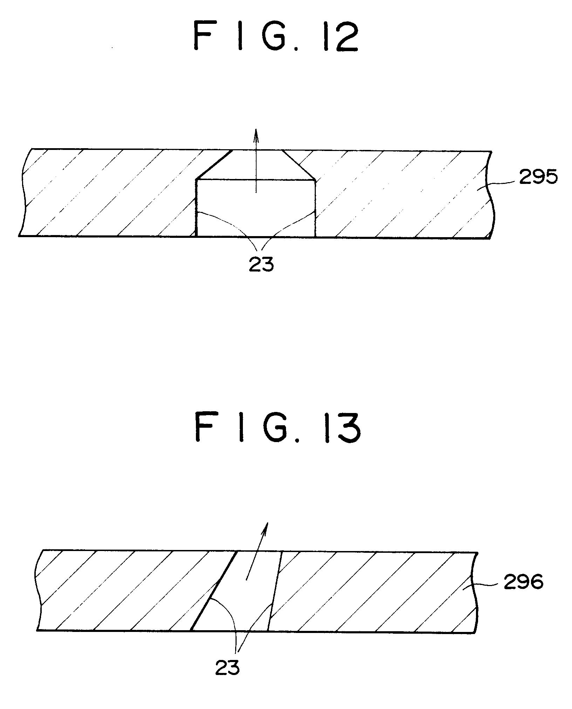

In Fig. 10, a material other than Teflon (glass, for example) is used for the protection plate 293 and only the region near the vaporizing hole 23 is coated with Teflon 293a. Moreover, in Fig. 11, only the vaporizing hole 23 of the protection plate 294 which is made of a raw material of glass is made of Teflon and this vaporizing hole 23 is fitted thereto. Fig. 12 illustrates the vaporizing hole 23 of the protection plate 295, where the diameter of only the upper end part is reduced sharply. These profiles provides the effect similar to that of the third embodiment.

Fig. 13 shows the protection plate 296 where the diameter of opening end part of the vaporizing hole 23 is reduced and the hole itself is inclined toward the relative moving direction of the photographic paper provided opposed to the recording means. This example provides a merit that the recording dots may be formed easily at the predetermined positions to realize more accurate recording when the photographic paper is not moved intermittently in the microscopic view but is moved continuously. Particularly in the full-color recording, this example provides outstanding effects without any color displacement.

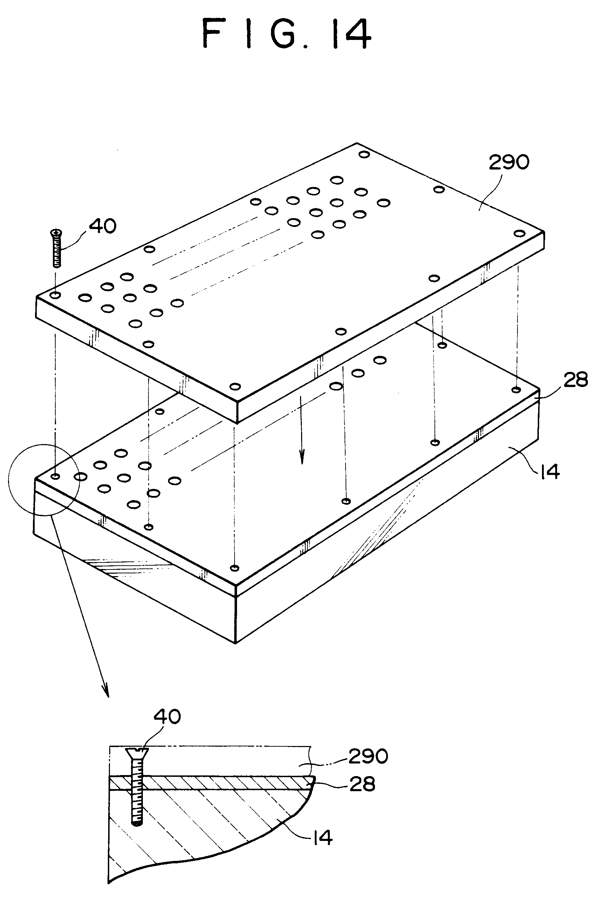

The protection plate may removably be mounted to the base in direct or through a spacer and is made of a material which satisfies the requirement γc < γ with respect to the dye used or the protection plate coated with such material can be selected. Fig. 14 is a disassembled perspective view of the essential portion of a recording head structured as explained above.

The protection plate 290 in this example is made of Teflon. The glass base 14 and spacer 28 may be coupled with thermal deposition of glass. The protection plate 290 can also be coupled with these elements using coupling bolts 40. In this case, for example, a clearance hole is previously bored to a part of the base 14 where is engaged with the threaded part of the bolt 40. This clearance hole is filled with unhardened resin and a bolt is inserted into this resin. After the resin is hardened, the bolt is removed to form an internal thread.

Above example is applied to a serial type recording device, but the present invention can also be applied in the same manner to a line type recording device. In the line type recording, the vaporizing means is arranged in a line for each color in such a length as single line and each vaporizing means is selectively operated while the recording sheet is transferred in the direction perpendicular to the line of vaporizing means.

Fig. 15 is a disassembled perspective view of a recording device (printer device).

In Fig. 15, the reference numeral 100 designates a non-contact laser beam thermal transfer type color video printer. A cassette 3 for accommodating a recording sheet 50 and a flat base 4 for recording are provided on a frame chassis 2 covered with a cabinet 2a.

A paper feed drive roller 6a which is driven by a motor 5 is provided in the side of recording sheet exhaust port 2b in the cabinet and a pressure-driven roller 6b is also provided to hold the recording sheet 50 with a slight pressure in combination with the paper feed drive roller 6a. In the upper side of the cassette 3 within the cabinet 2a, a head drive circuit substrate 7 mounting a drive IC 80 and a DC power supply 8 are provided. The head drive circuit substrate 7 and the head (recording means) 110 (having almost the same structure as the printer head 40 shown in Fig. 1, however, the upper and lower sides are arranged inversely) provided on the flat base 4 are connected through a flexible harness 7a.

The head 110 is provided with solid dye accommodation vessels 11Y, 11M, 11C for accommodating respective sublimate dyes 12Y, 12M, 12C under the solid powder condition of yellow (Y), magenta (M) and cyan (C).

The recording sheets 50 in the cassette 3 of this color video printer 1 are isolated sheet by sheet and is then supplied between the flat base 4 and head 110 and is moreover transmitted to the paper feed drive roller 6a.

The head 110 is pressed toward the flat base 4 with a light load (about 50g) with a pair of light load adding springs 9, 9 through a recording sheet 50. Moreover, semiconductor laser chips 18 for three colors (Y, M, C) are arranged in three lines in parallel as many as the number of pixels. The dye of each color is heated and liquefied and supplied in the constant amount to the vaporizing means 17 from the liquid dye accommodating vessels 11Y, 11M, 11C.

When a sheet of recording paper 50 is held, under the condition explained above, by the paper feed drive roller 6a and the pressure-driven roller 6b, a dot signal is sent to the head 10 for single line and single color and the laser beam L generated by each semiconductor laser chip 18 is converted into heat. Thereby, each liquid dye is vaporized, the vaporized dyes of Y, M, C are sequentially transmitted through the gap 11 in the sequence of Y → M → C to enable the color print on the dye receiving layer 50a coated on the surface of the recording sheet 50 transferred between the flat base 4 and cover 20.

The examples shown in Fig. 9 to Fig. 14 can naturally be applied to the line type recording device of Fig. 15.

The preferred embodiments of the present invention have been explained above, however, the present invention allows various other modifications and changes to be added to above embodiments based on the technical concepts of the present invention as claimed.

For instance, a solid dye is once liquefied and it is then vaporized for the recording, moreover a solid dye is heated by a laser beam to vaporize in direct, namely to sublimate for the recording and furthermore the liquid dye (liquefied under the room temperature) can be accommodated in the dye accommodating vessel 11.

Moreover, the structure and shape of recording layer and head may be set to any adequate one other than those explained above and the other adequate material may also be used for each part of the head.

It is also possible that the base member is coupled with the cover, thereby the discharge port and the vaporizing means are patterned only with single process to save the process of mask alignment.

In addition, for the transfer of recording dye to the recording sheet, sublimation or abrasion (the phenomenon that a part of a substance rushes out in such a manner as boiling with the process other than the vaporization by irradiation of laser beam to continue the etching) may be utilized in addition to the vaporization of liquid dye.

Furthermore, as an energy for vaporizing or sublimating a recording material such as dye, etc., the other energies, for example, the discharge utilizing, for example, the other electromagnetic wave and stylus electrode may be used in addition to the laser beam.

In the present invention, since at least the peripheral part of the aperture of the recording material accommodating means is made of a material different from that of the other part of the recording material accommodating means and a critical surface tension of at least the peripheral part explained above against the recording material set smaller than the surface tension of the recording material, the recording material is never adhered to the aperture and its peripheral part when the recording material transfers to the recording sheet through the aperture described above.

It is because at least this peripheral part has a critical surface tension which is smaller than the surface tension of the recording material and thereby such peripheral part is never wetted by the recording material. Therefore, the recording material is never unwantedly adhered to the aperture and its peripheral part. As a result, the aperture and its peripheral part are always kept clean and transfer of the recording material to the recording sheet is never interfered, always ensuring high quality recording.

## Claims

1. A recording device comprising a recording material accommodating means (10) to transfer said recording material (22) from a reservoir (15) to a recording sheet (50) through an aperture (11) of said recording material accommodating means (10), wherein at least a peripheral part (290) of said aperture (11) is made of a material different from that of the other part of said recording material accommodating means (10) and a critical surface tension of at least said peripheral part (290) against said recording material (22) is smaller than a surface tension of said recording material (22),
**characterized in that**
- said peripheral part is formed of a protection plate (290) surrounding said aperture (11) adjacent to said recording sheet (50), and
- vaporizing means (17) including small columns (21) are provided between said reservoir (15) and a bottom surface of said protection plate (290), said bottom surface being opposite to a surface thereof adjacent to said recording sheet (50).

2. A recording device according to claim 1, wherein a critical surface tension of at least the peripheral part (290) of the aperture (11) of said recording material accommodating means (10) is smaller than a critical surface tension of a recording material vessel forming said recording material accommodating means (10).

3. A recording device according to claim 1 or 2, wherein a critical surface tension of at least said peripheral part (290) of said aperture (11) of the recording material accommodating means (10) is under 20 dyn/cm.

4. A recording device according to any one of claims 1 to 3, wherein said peripheral part comprises a peripheral member having a critical surface tension which is smaller than a surface tension of the recording material, which member is provided in the periphery of the aperture (11) of the recording material accommodating means (10).

5. A recording device according to claim 4, wherein the peripheral part is removably mounted to the aperture.

6. A recording device according to any one of the preceding claims, wherein the aperture has a region of which the cross-sectional view becomes smaller toward the upper end thereof defined in the transferring direction of the recording material.

7. A recording device according to any one of the preceding claims, wherein the recording material is provided as a layer of liquid recording material and the arrangement is such that a gap is provided between the liquid recording material layer and the recording sheet.

8. A recording device according to any one of the preceding claims, wherein the recording material is in liquid form and wherein a heat source (18) is provided to cause the liquid recording material to be transmitted to the recording sheet (50).

9. A recording device according to claim 8, wherein said heat source is a laser (18).

10. A recording method for enabling the recording by transmitting a recording material to a recording sheet (50) through an aperture (11), utilizing a recording device described in any one of the preceding claims.

11. A recording method according to claim 10, wherein a liquid recording material having a surface tension of 20 dyn/cm or higher is used.

## Patentansprüche

1. Aufzeichnungsvorrichtung mit einer Aufzeichnungsmateriai-Aufnahmeeinrichtung (10) zum Übertragen des Aufzeichnungsmaterials (22) von einem Reservoir (15) zu einem Aufzeichnungsblatt (50) über eine Öffnung (11) der Aufzeichnungsmaterial-Aufnahmeeinrichtung (10), wobei wenigstens ein Randteil (290) der Öffnung (11) aus einem Material hergestellt ist, das von demjenigen des anderen Teiles der Aufzeichnungsmaterial-Aufnahmeeinrichtung (10) verschieden ist, und eine kritische Oberflächenspannung von wenigstens dem Randteil (290) gegenüber dem Aufzeichnungsmaterial (22) kleiner ist als eine Oberflächenspannung des Aufzeichnungsmaterials (22),
**dadurch gekennzeichnet, daß**
- der Randteil aus einer Schutzplatte (290) gebildet ist, die die Öffnung (11) neben dem Aufzeichnungsblatt (50) umgibt, und
- eine Verdampfungseinrichtung (17) einschließlich kleiner Säulen (21) zwischen dem Reservoir (15) und einer Bodenfläche der Schutzplatte (290) vorgesehen ist, wobei die Bodenfläche gegenüber zu einer Oberfläche hiervon neben dem Aufzeichnungsblatt (50) liegt.

2. Aufzeichnungsvorrichtung nach Anspruch 1, bei der eine kritische Oberflächenspannung von wenigstens dem Randteil (290) der Öffnung (11) der Aufzeichnungsmaterial-Aufnahmeeinrichtung (10) kleiner ist als eine kritische Oberflächenspannung eines Aufzeichnungsmaterialbehälters, der die Aufzieichnungsmaterial-Aufnahmeeinrichtung (10) bildet.

3. Aufzeichnungsvorrichtung nach Anspruch 1 oder 2, bei der eine kritische Oberflächenspannung von wenigstens dem Randteil (290) der Öffnung (11) der Aufzeichnungsmaterial-Aufnahmeeinrichtung (10) unter 20 dyn/cm liegt.

4. Aufzeichnungsvorrichtung nach einem der Ansprüche 1 bis 3, bei der der Randteil ein Randglied aufweist, das eine kritische Oberflächenspannung hat, die kleiner als eine Oberflächenspannung des Aufzeichnungsmaterials ist, wobei das Glied in dem Rand der Öffnung (11) der Aufzeichnungsmaterial-Aufnahmeeinrichtung (10) vorgesehen ist.

5. Aufzeichnungsvorrichtung nach Anspruch 4, bei der der Randteil entfernbar an der Öffnung befestigt ist.

6. Aufzeichnungsvorrichtung nach einem der vorangehenden Ansprüche, bei der die Öffnung einen Bereich hat, deren Querschnittsdarstellung zu dem oberen Ende hiervon, das in der Transferrichtung des Aufzeichnungsmaterials definiert ist, kleiner wird.

7. Aufzeichnungsvorrichtung nach einem der vorangehenden Ansprüche, bei der das Aufzeichnungsmaterial als eine Schicht von flüssigem Aufzeichnungsmaterial vorgesehen und die Anordnung derart ist, daß ein Spalt zwischen der flüssigen Aufzeichnungsmaterialschicht und dem Aufzeichnungsblatt besteht.

8. Aufzeichnungsvorrichtung nach einem der vorangehenden Ansprüche, bei der das Aufzeichnungsmaterial in flüssiger Form vorliegt, und bei der eine Wärmequelle (18) vorgesehen ist, um eine Übertragung des flüssigen Aufzeichnungsmaterials zu dem Aufzeichnungsblatt (50) zu veranlassen.

9. Aufzeichnungsvorrichtung nach Anspruch 8, bei der die Warmequelle ein Laser (18) ist.

10. Aufzeichnungsverfahren zum Ermöglichen des Aufzeichnens durch Übertragens eines Aufzeichnungsmaterials zu einem Aufzeichnungsblatt (50) durch eine Öffnung (11) unter Verwenden einer Aufzeichnungsvorrichtung nach einem der vorangehenden Ansprüche.

11. Aufzeichnungsverfahren nach Anspruch 10, bei dem ein flüssiges Aufzeichnungsmaterial mit einer Oberflächenspannung von 20 dyn/cm oder mehr verwendet wird.

## Revendications

1. Dispositif d'enregistrement comprenant un moyen de réception de matériau d'enregistrement (10) pour transférer ledit matériau d'enregistrement (22) depuis un réservoir (15) jusqu'à une feuille d'enregistrement (50) au travers d'une ouverture (11) dudit moyen de réception de matériau d'enregistrement (10), dans lequel au moins une partie périphérique (290) de ladite ouverture (11) est réalisée en un matériau différent de celui de l'autre partie dudit moyen de réception de matériau d'enregistrement (10) et une tension de surface critique d'au moins ladite partie périphérique (290) contre ledit matériau d'enregistrement (22) est inférieure à une tension de surface dudit matériau d'enregistrement (22),
caractérisé en ce que :
ladite partie périphérique est formée par une plaque de protection (290) qui entoure ladite ouverture (11) en une position adjacente à ladite feuille d'enregistrement (50) ; et
un moyen de vaporisation (17) incluant de petites colonnes (21) est prévu entre ledit réservoir (15) et une surface de fond de ladite plaque de protection (290), ladite surface de fond étant opposée à une surface afférente adjacente à ladite feuille d'enregistrement (50).

2. Dispositif d'enregistrement selon la revendication 1, dans lequel une tension de surface critique d'au moins la partie périphérique (290) de l'ouverture (11) dudit moyen de réception de matériau d'enregistrement (10) est inférieure à une tension de surface critique d'un récipient de matériau d'enregistrement formant ledit moyen de réception de matériau d'enregistrement (10).

3. Dispositif d'enregistrement selon la revendication 1 ou 2, dans lequel une tension de surface critique d'au moins ladite partie périphérique (290) de ladite ouverture (11) du moyen de réception de matériau d'enregistrement (10) est inférieure à 20 dyn/cm.

4. Dispositif d'enregistrement selon l'une quelconque des revendications 1 à 3, dans lequel ladite partie périphérique comprend un élément périphérique présentant une tension de surface critique qui est inférieure à une tension de surface du matériau d'enregistrement, lequel élément est prévu dans la périphérie de l'ouverture (11) du moyen de réception de matériau d'enregistrement (10).

5. Dispositif d'enregistrement selon la revendication 4, dans lequel la partie périphérique est montée de façon amovible sur l'ouverture.

6. Dispositif d'enregistrement selon l'une quelconque des revendications précédentes, dans lequel l'ouverture comporte une région dont la vue en coupe transversale devient plus petite en direction de son extrémité supérieure comme défini suivant la direction de transfert du matériau d'enregistrement.

7. Dispositif d'enregistrement selon l'une quelconque des revendications précédentes, dans lequel le matériau d'enregistrement est prévu en tant que couche de matériau d'enregistrement liquide et l'agencement est tel qu'un espace est prévu entre la couche de matériau d'enregistrement liquide et la feuille d'enregistrement.

8. Dispositif d'enregistrement selon l'une quelconque des revendications précédentes, dans lequel le matériau d'enregistrement est sous forme liquide et dans lequel une source de chaleur (18) est prévue pour faire en sorte que le matériau d'enregistrement liquide soit transmis jusqu'à la feuille d'enregistrement (50).

9. Dispositif d'enregistrement selon la revendication 8, dans lequel ladite source de chaleur est un laser (18).

10. Procédé d'enregistrement pour permettre l'enregistrement en transmettant un matériau d'enregistrement jusqu'à une feuille d'enregistrement (50) au travers d'une ouverture (11), utilisant un dispositif d'enregistrement décrit selon l'une quelconque des revendications précédentes.

11. Procédé d'enregistrement selon la revendication 10, dans lequel un matériau d'enregistrement liquide présentant une tension de surface de 20 dyn/cm ou plus est utilisé.
